# EUROPEAN PATENT APPLICATION

(11) **EP 3 070 645 A1**
(43) Date of publication of application: **21.09.2016**
(21) Application number: 15160132.5
(22) Date of filing: 20.03.2015
(51) Int. Cl.: G06K 9/62, G06F 3/01

(54) **Apparatus and method for automatically testing a gesture recognition device**

(71) Applicant: Delphi Technologies, Inc., Troy MI 48007 (US)
(72) Inventor: Tyzenhauz Tomasz, 30-383 Krakow (PL); Massalski, Przemyslaw, 44-240 Zory (PL)
(74) Representative: Delphi France SAS

(57) **Abstract**

A testing apparatus for a gesture recognition device comprises a support frame having a mounting member for mounting the gesture recognition device under test, a base, wherein the support frame and the base at least partially form a boundary of a testing area, an interaction space that is aligned with the mounting member of the support frame and arranged at least partially inside of the testing area, a robot comprising a robot arm and an anthropomorphic robot hand, wherein the robot hand and at least a portion of the robot arm are arranged in the interaction space, and a controller for controlling the robot and the gesture recognition device under test and for processing the test results.

## Description

The present invention relates to an apparatus and to a method for automatically testing a gesture recognition device (GRD).

Gesture recognition devices generally comprise an input device for detecting a user's movements and software for determining a gesture that corresponds to the detected movements. Such input devices may be a camera, a wearable device, such as a glove, or a hand-held device, such as a controller or a wand. In particular, camera-based gesture recognition devices are increasingly used in place of push buttons or touch screens to interact with a user interface in automobiles. For example, a driver may interact with an automotive multimedia system by performing certain hand gestures. This enables the driver to safely execute a variety of commands without diverting his attention from the road.

Despite their advantages, such gesture recognition systems are more difficult to test than traditional modes of input. Whereas traditional modes of input often have fixed locations and thus a limited number of test conditions, gesture recognition devices must be tested for an infinite number of test conditions. For example, these conditions result from the physical characteristics of each user's hands, the way in which a given user performs the gestures, environmental factors, and the large number of possible combinations resulting from even a limited number of supported gestures. Accordingly, the testing of gesture recognition devices has conventionally involved multiple human testers and, therefore, high testing costs. Furthermore, the testing process should ideally result in metrics such as a gesture recognition rate. However, metrics require repeated test processes performed under identical testing conditions, which is difficult for human testers.

Thus, there remains a need for improved apparatus and methods for testing gesture recognition devices.

The present invention provides an apparatus and a method for testing camera-based gesture recognition devices for recognizing hand gestures, in which test runs are automatically executed by a robot arm with an anthropomorphic robot hand.

A first aspect of the present invention is a testing apparatus for a gesture recognition device comprising a support frame having a mounting member for mounting the gesture recognition device under test (hereinafter 'device under test') and a base. Together, the support frame and the base at least partially form a boundary of a testing area. The testing area at least partially contains an interaction space that is aligned with the mounting member of the support frame and can correspond to the angle of view of the optical sensor (hereinafter 'camera') of a mounted device under test. The testing apparatus also comprises a robot having a robot arm and an anthropomorphic robot hand, with the robot hand and at least part of the robot arm being contained within the interaction area. Finally, the testing apparatus in accordance with the present invention also comprises a controller for automatically controlling the robot and the device under test and for processing the test results.

Thus, the present invention provides a testing apparatus whose components are arranged and configured for efficient automatic testing of gesture recognition devices. In other words, the tester needs only to mount the device under test at the mounting member and start an automatic test sequence via the controller. The testing apparatus may also be built as a transportable stand-alone unit.

According to an embodiment of the invention, the controller comprises a comparison unit for comparing data from the robot, such as a position or a gesture performed by the robot hand, with data detected by the device under test. For example, this comparison unit may form part of the controller software.

In a further embodiment, the mounting member is movable in at least one direction relative to the support frame. The adjustment may take place manually in the form of a movable bracket, or automatically via an electric motor. This makes it possible to adjust the position of a mounted device under test relative to the support frame, for example for calibrating the camera of the device under test.

Furthermore, the support frame and the base may fully enclose the testing area, for example, by forming a rectangular cage. Such enclosures are stable and can be built from readily available materials, such as metal bars. In the case of a rectangular enclosure, it is also possible to install transparent walls in the support frame to increase the safety of the testing apparatus.

Though the mounting member may be provided at any location along the support frame, a position at the top of the support frame enables the device under test to be positioned above the robot hand and robot arm and simulate the position of a gesture recognition device installed in the ceiling of a vehicle cockpit. In other words, the mounting member is arranged opposite the base of the apparatus with the interaction space arranged between the mounting member and the base.

In order to be able to execute the tests under different lighting conditions, the testing apparatus may further comprise means to direct light toward the robot hand, for example light sources such as lamps. Additionally or alternatively, the testing apparatus may comprise means to darken the testing area, for example curtains hung from the support frame or sheets of opaque material arranged between the testing area and a lamp. By darkening the testing area, it is possible to test the gesture recognition device under simulated nighttime conditions.

In accordance with a further embodiment, the testing apparatus may comprise a sheet of background material arranged at the base of the apparatus to modify the reflective properties of the base.

It is also possible to test different hand shapes when the robot comprises multiple detachable anthropomorphic robot hands. In this way, correspondingly built hands may be used to simulate, for example, a large man's hand versus a petite woman's hand. Alternatively or additionally, a robot hand may comprise multiple changeable hand coverings, for example gloves, for simulating a range of different skin tones.

A second aspect of the present invention is a method for automatically testing a gesture recognition device in which a device under test is first mounted at a mounting member of a support frame. A robot comprising a robot arm with an anthropomorphic hand is then arranged within a testing area whose boundary is at least partially defined by the support frame and a base attached to the support frame such that the robot hand and at least part of the robot arm are arranged within an interaction space of the device under test.

Next, at least one test run comprising the following steps is automatically executed by means of a controller connected to the robot and to the gesture recognition device:
a) commanding the robot to move the robot hand along a path from a first position to a second position;
b) measuring the path between the first and second positions using the gesture recognition device;
c) commanding the robot hand to perform a hand gesture in the second position;
d) recognizing the hand gesture performed by the robot hand with the gesture recognition device;
e) calculating the path using location data from the robot hand;
f) comparing the calculated path and the path measured by the gesture recognition device; and
g) comparing the commanded hand gesture and the hand gesture recognized by the gesture recognition device.

According to this aspect of the invention, a test run represents the smallest unit of movement performed automatically by the robot and detected by the device under test.

In one embodiment, multiple test runs may be executed sequentially to form a single test case. Depending on the scenario targeted by the test case, the path and gesture of each of the repeated test runs may be identical, or they may be different paths and gestures that are combined to simulate a larger movement performed by the user. For example, a certain gesture may be repeated multiple times across different paths within an interaction space of the camera of the device under test, i.e. for different first and second positions of the robot hand. This ensures a thorough, yet efficient testing across the interaction space of the camera.

Furthermore, multiple test cases may be grouped into a single test procedure. Finally, multiple test procedures may be grouped into a single test sequence. As explained below in further detail, the test sequence may correspond to an uninterrupted testing period that is started by the user and that results in a series of test metrics. These intermediate building blocks of test procedures and test cases may be used to make it easier to modify and design test sequences, for example in a modular format.

In any case, the method according to the second aspect provides an efficient and effective way of automatically black box testing a gesture recognition device. The tests are efficient in the sense that a single robot can execute repeated gestures for long periods and thus replace numerous human testers. For example, the robot can be configured to execute a test sequence at times when human testers are unavailable, such as during nighttime or holidays. The tests are effective in the sense that that the robot can be programmed to perform movements and gestures in a way that leads to high test coverage and identical test conditions.

In order to obtain more accurate test results, the robot and/or the gesture recognition device may be calibrated prior to the execution of the test run. Calibration of the robot arm and robot hand ensures that robot arm and robot hand reliably move to and between the commanded first and second positions. Calibration of the gesture recognition device may take place in terms of the image sharpness, which can affect gesture recognition, or in terms of the accuracy with which the gesture recognition device measures the distance traveled by the robot hand.

In order to simulate a variety of environmental factors, the method may comprise the additional step of illuminating or darkening the testing area. Similarly, it is also possible to modify the reflective properties of the base of the testing apparatus, for example by providing a sheet of background material at the base. In this context, background refers to the fact that the robot hand and robot arm are arranged between the camera of the gesture recognition device and the background material.

In order to simulate a wide variety of users' hands, the method may further comprise the step of detaching the robot hand from the robot arm and attaching a different robot hand to the robot arm and/or exchanging a material covering the robot hand.

Finally, a third aspect of the present invention is a testing apparatus configured to carry out the method according to the second aspect of the invention.

Various features and advantages of the present invention will become more apparent from the following description and accompanying drawing wherein:
Fig. 1 shows a testing apparatus according the present invention;
Fig. 2 shows the testing apparatus according to Fig. 1 after the robot has performed a hand gesture;
Fig. 3 shows a further embodiment of a testing apparatus according to the present invention;
Fig. 4 shows a schematic diagram of controller software for the embodiment of Fig. 3;
Fig. 5a and 5b show a flow diagram for a test method according to the invention and for a single test run, respectively; and
Fig. 6 shows a model of an interaction space for the embodiments according to the previous figures.

Referring to the figures, wherein like numerals indicate corresponding parts throughout the several views and aspects of the invention, a testing apparatus 10 for testing a gesture recognition device 12 comprises a support frame 14 having a mounting member 16 for mounting the gesture recognition device 12 (hereinafter 'device under test') and a base 18.

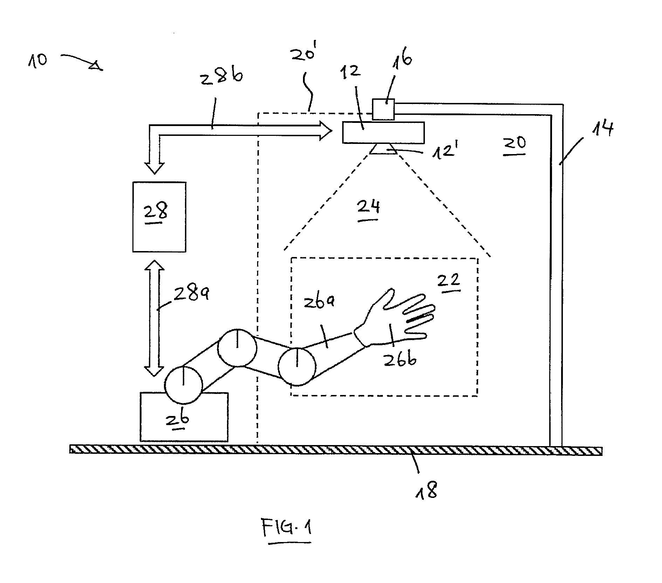

In the embodiment of Fig. 1, the mounting member 16 is arranged at an upper side of the support frame 14, so that a camera 12' of the mounted device under test 12 faces downwards into a testing area 20, whose boundary 20' is partially formed by the support frame 14 and base 18. The testing area 20 contains an interaction space 22 that is vertically aligned with the mounting member 16 of the support frame 14. As shown by its dashed line, the interaction space 22 is a space within the testing area 20 that corresponds to the angle of view 24 of the camera 12' of a mounted device under test 12 and that serves as an area of reference for arranging a robot 26. Accordingly, though the interaction space 22 is smaller than and contained by the testing area 20, the size of the interaction space 22 relative to the testing area 20 can be larger than shown as long as the interaction space 22 is aligned with the mounting member 16.

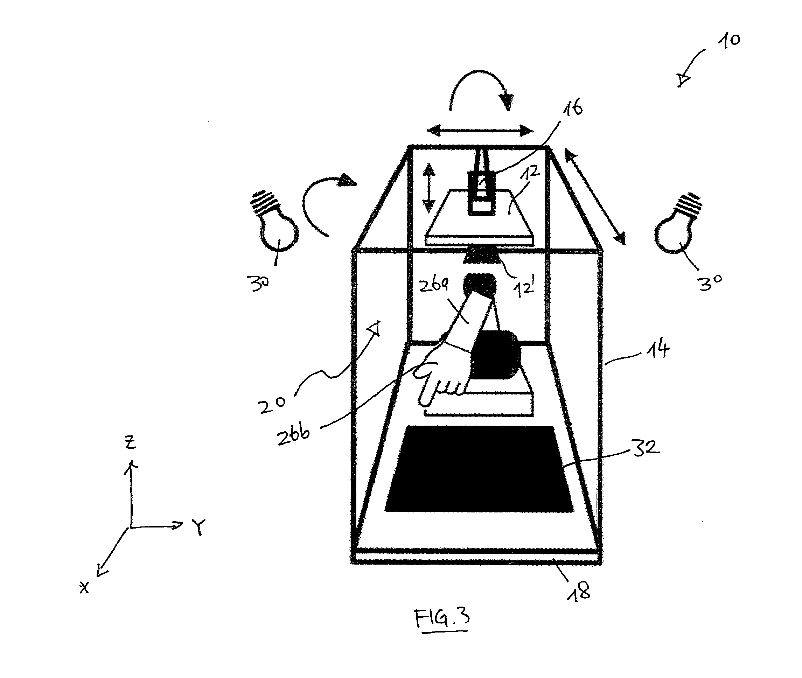

The robot 26 of the testing apparatus 10 comprises a robot arm 26a and an anthropomorphic robot hand 26b, with the robot hand 26b and at least part of the robot arm 26a being arranged within the interaction area 22. In other words, the interaction area 22 not only corresponds to the angle of view 24 of the camera; it also corresponds to the range of movement of the robot arm 26a and robot hand 26b along x, y, z-axes (Fig. 3). As a result, every time that a device under test 12 is mounted at the mounting member 16, the range of motion of the robot arm 26a and robot hand 26b is automatically aligned with the angle of view 24 of the device camera 12'.

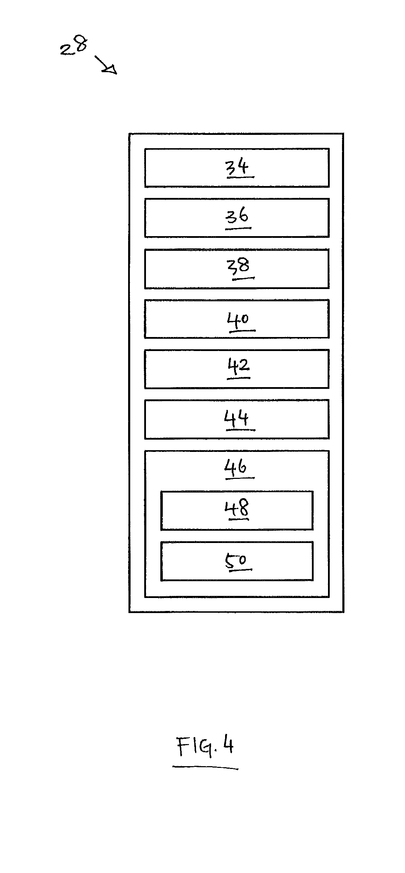

Furthermore, the testing apparatus 10 comprises a controller 28 for automatically controlling the robot 26 and the device under test 12, as indicated by the arrows 28a and 28b, and for processing the test results. The controller 28 contains one or more processors and memory for running controller software 28' (Fig. 4). The controller 28 also comprises a monitor (not shown) that provides a graphical user interface on which test sequences for the testing apparatus 10 can be loaded or even programmed.

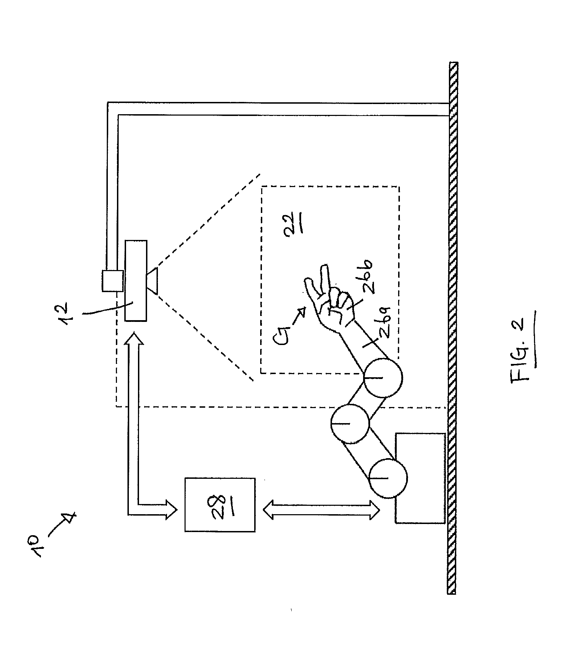

Fig. 2 shows the execution of a hand gesture G by the robot 26 in order to test the gesture recognition device 12. In comparison to Fig. 1, the robot arm 26a has been moved such that the robot hand 26b is in a different position. Furthermore, the robot hand 26b has performed the 'scissors' gesture in comparison to the open-palmed gesture shown in Fig. 1. This combination of a path traveled by the robot arm 26a and robot hand 26b and an executed gesture can be used to simulate and test the various movements to be detected by the gesture recognition device 12, as will be explained in more detail below.

Fig. 3 shows a further embodiment of a testing apparatus 10 according to the present invention that differs significantly with regard to its support frame 14. Specifically, the support frame 14 is formed by a rectangular cage that completely encloses the testing area 20 along with the base 18, for example a metal plate. The support frame 14 may be built, for example, using lightweight metal bars to form a portable and simple testing apparatus 10. The rectangular sides of the support frame 14 are also suitable for hanging transparent materials for safety purposes, or for hanging curtains or opaque materials (not shown) for simulating nighttime conditions.

In the embodiment of Fig. 3, the mounting member 16 is arranged at the upper side of the support frame 14 and is movable along x, y and z-axes and can be rotated relative to the support frame 14. As the mounting member 16 is arranged at the upper side of the rectangular frame 14 with the testing device 12 facing downwards towards the robot 26, the testing apparatus 10 simulates the conditions of a gesture recognition device installed in the roof of a vehicle cockpit.

In order to test the effect of various lighting conditions, the testing apparatus 10 further comprises two sources 30 of visible light that are directed toward the robot hand 26b. Additionally, the apparatus 10 comprises a sheet 32 of background material arranged at the base 18 to alter the reflective properties of the base 18.

Fig. 4 shows an overview of the controller software 28' for the controller 28 in the embodiment of Fig. 3. This controller software 28' may also be used in the embodiment of Fig. 1 and 2. The controller software 28' comprises a calibration module 34 for calibrating both the robot 26 and the gesture recognition device 12. Calibration of the robot 26 ensures that the robot arm 26a and robot hand 26b accurately move between commanded first and second positions during the execution of a test run. Calibration of the gesture recognition device 12 may adjust, for example, at least one of the sharpness of the image detected by the camera 12' and the accuracy with which the device 12 measures distances traveled by the robot hand 26b.

A test editor 36 supports the user in designing or modifying test cases, test procedures and test sequences. Once the test sequence has been loaded from a pre-saved file or created using the test editor 36, it is executed using the test sequencer 38. During the test sequence, a results comparator 40 compares the positions of the robot hand 26b as well as the gestures recognized by the gesture recognition device 12 with the commands sent by the controller 28 to the robot 26. This comparison produces a test result. At the same time, a logger 42 stores data received from the gesture recognition device 12 that is used by a metrics generation module 44 to generate test metrics after the test sequence has been completed. The test metrics can include the information on correctly recognized gestures, incorrectly recognized gestures or mismatches, unrecognized gestures, or so-called false positives. This information may be expressed in terms of the percentage of gestures in a test sequence, the number recognized per hours and the total number of recognized gestures in a given category.

Furthermore, a communication interface 46 is provided for sending and receiving data between the controller 28, the gesture recognition device 12 and the robot 26. Specifically, a robot arm driver 48 handles the communication and data link 28a between the controller 28 and the robot 26, while a device under test driver 50 handles the data link 28b between the controller 28 and the gesture recognition device under test 12.

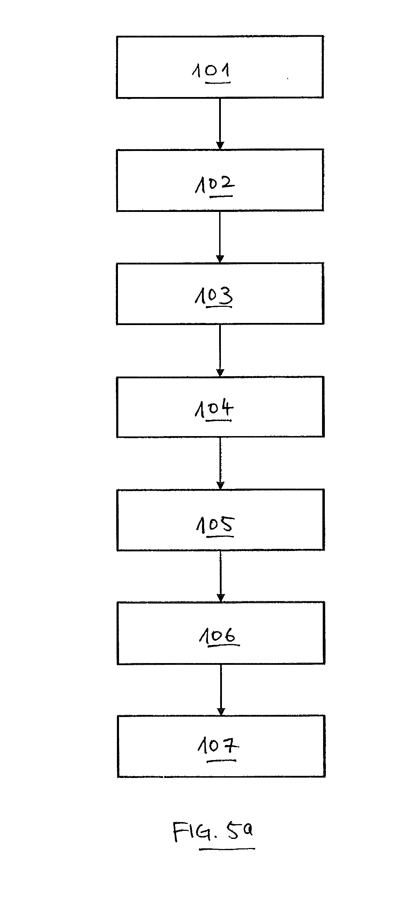

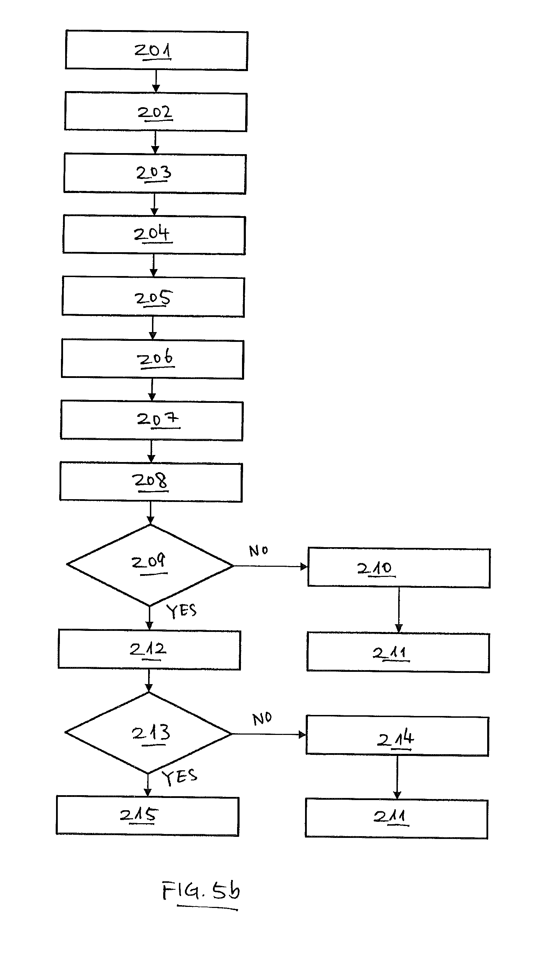

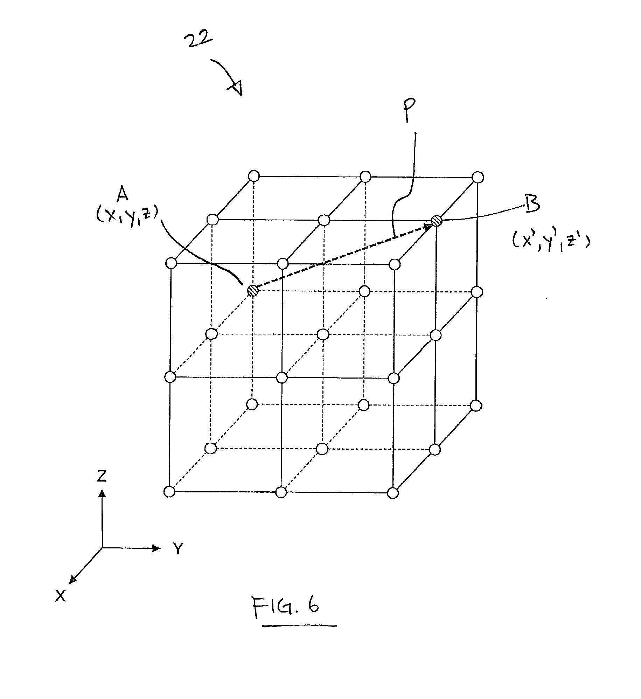

Turning to Fig. 5 and 6, a flow chart for the execution of an embodiment of a test method and of a single test run, as well as a model for the interaction space 22 are shown.

In a first method step 101, a device under test 12 is installed at the mounting member 12 of the support frame 14. In a next step 102, the robot 26 is calibrated using the calibration module 34 of the controller software 28'. Using the same calibration module 34, the device under test 12 is also calibrated with respect to the image sharpness of the camera 12' and the accuracy with which the distance traveled by the robot hand 26b is measured. Using the test editor 36, a test sequence is prepared in step 104 by creating or loading a test sequence via the graphical user interface of the controller 28. Each test sequence comprises multiple test procedures, which themselves comprise multiple test cases. Every test case comprises multiple test runs as shown in Fig. 5b. In step 105, the test sequencer 38 is used to automatically execute the entire test sequence, while the results comparator 40 generates test results and produces a test report for the sequence. Finally, the metrics generation module 44 is used at step 107 to produce metrics pertaining to the test sequence.

As shown in Fig. 5b, at the first step 201 of the test run, the first position A in terms of x, y, z coordinates (Fig. 6) and a gesture G of the robot hand 26b are read by the controller 28. Next, in step 202, the controller 28 reads a distance and direction to be traveled by the robot hand 26b, which is expressed in terms of change in the x, y and z directions. After obtaining the information, the controller 28 first commands the robot 26 to move the robot arm 26a and the robot hand 26b to the first position A in step 203. Then, the controller 28 activates the gesture recognition device 12 in step 204. Once the gesture recognition device 12 has been activated, the controller 28 commands the robot 26 to move the robot hand 26b along a path P shown in Fig. 6 in step 205, until the robot hand 26b arrives at the second position B. While the gesture recognition device 12 is in operation, the controller 28 commands the robot hand 26b to execute the gesture G in step 206 so that the gesture G is captured by the camera 12' of the gesture recognition device 12. Then, in step 207, the controller 28 commands the gesture recognition device 12 to stop monitoring the robot 26.

The controller 28 then reads the position of the robot hand 26b via the data link 28a to the robot 26 in step 208, which corresponds to the second position B. Using location data regarding the first and second positions A, B from the robot 26, the controller 28 calculates the distance of path P covered by the robot hand 26b, and compares this to the distance of path P as measured by the gesture recognition device in step 209. If these two values do not match, the test run ends at step 210 with an error 211 pertaining to an invalid hand position, and the test finishes with a negative result.

If the measured distance and the path P traveled by the robot hand 26b are equal within a pre-determined margin of error, the controller 28 then compares a recognized gesture G' with the gesture G included in the test run in steps 212 and 213. If the gestures G, G' match, then the test has passed 215. On the other hand, if the gestures G, G' do not correspond, the controller software reports an error 214 that an invalid gesture has been recognized.

By repeating the test runs shown in Fig. 5 for different points and paths and/or gestures within the framework shown in Fig. 6, the resulting test sequence leads to a high coverage and thus accurate testing of the interaction space 22 and thus the gesture recognition device 12.

### List of reference numerals

- 10: testing apparatus
- 12: gesture recognition device
- 12': camera
- 14: support frame
- 16: mounting member
- 18: base
- 20: testing area
- 20': testing area boundary
- 22: interaction space
- 24: angle of view
- 26: robot
- 26a: robot arm
- 26b: robot hand
- 28: controller
- 28': controller software
- 28a: robot control
- 28b: control of the device under test
- 30: source of visible light
- 32: sheet of background material
- 34: calibration module
- 36: test editor
- 38: test sequencer
- 40: results comparator
- 42: logger
- 44: metrics generation module
- 46: communication interface
- 48: robot arm driver
- 50: device under test driver
- A: first position
- B: second position
- G: gesture
- P: path traveled by the robot hand 26b

## Claims

1. A testing apparatus (10) for a gesture recognition device (12) comprising:
a support frame (14) having a mounting member (16) for mounting the gesture recognition device under test (12);
a base (18), wherein the support frame (14) and the base (18) at least partially form a boundary (20') of a testing area (20);
an interaction space (22) that is aligned with the mounting member (16) of the support frame (14) and arranged at least partially inside of the testing area (20);
a robot (26) comprising a robot arm (26a) and an anthropomorphic robot hand (26b), wherein the robot hand (26b) and at least a portion of the robot arm (26a) are arranged in the interaction space (22); and
a controller (28) for automatically controlling the robot (26) and the gesture recognition device under test (12) and for processing the test results.

2. An apparatus (10) in accordance with claim 1 wherein the controller (28) comprises a comparison unit (40) for comparing data from the robot (26) with data from the gesture recognition device under test (12).

3. An apparatus (10) in accordance with claim 1 or claim 2 wherein the mounting member (16) is movable in at least one direction relative to the support frame (14).

4. An apparatus (10) in accordance with any one of the preceding claims wherein the support frame (14) and the base (18) fully enclose the testing area (20).

5. An apparatus (10) in accordance with any one of the preceding claims wherein the interaction space (22) is arranged between the mounting member (16) of the support frame (14) and the base (18).

6. An apparatus (10) in accordance with any one of the preceding claims further comprising means (30) to direct light towards or block light from the robot hand (26b).

7. An apparatus (10) in accordance with any one of the preceding claims, further comprising a sheet (32) of background material arranged at the base (18).

8. An apparatus (10) in accordance with any one of the preceding claims wherein the robot (26) comprises multiple, detachable anthropomorphic robot hands (26b) and/or multiple changeable hand coverings for the robot hand that have different colors and/or materials.

9. A method for testing a gesture recognition device comprising the steps of:
mounting a gesture recognition device (12) at a mounting member (16) of a support frame (14);
arranging a robot (26) comprising a robot arm (26a) with an anthropomorphic robot hand (26b) in a testing area (20) whose boundary (20') is at least partially defined by the support frame (14) and a base (18); and
automatically executing a test run comprising the steps of:
a) commanding the robot (26) to move the robot hand (26b) along a path (P) from a first position (A) to a second position (B);
b) measuring the path (P) between the first and second positions (A, B) using the gesture recognition device (12);
c) commanding the robot hand (26b) to perform a hand gesture (G) in the second position (B);
d) recognizing the hand gesture performed by the robot hand (26b) with the gesture recognition device (12);
e) calculating the path (P) using location data from the robot hand (26b);
f) comparing the calculated path and the path measured by the gesture recognition device (12); and
g) comparing the commanded hand gesture (G) and the hand gesture recognized by the gesture recognition device.

10. A method in accordance with claim 9 wherein multiple test runs are executed for different first and second positions within an interaction space (22) at least partially contained in the testing area (20) and/or for different gestures to form a test case, a test procedure and/or a test sequence.

11. A method in accordance with claim 9 or 10, further comprising the step of calibrating the movement of the robot arm (26a) and robot hand (26b).

12. A method in accordance with any one of the claims 9 to 11, further comprising the step of calibrating the gesture recognition device (12) with respect to the image sharpness detected by the device and/or the accuracy of distances measured by the gesture recognition device (12).

13. A method in accordance with any one of the claims 9 to 12, further comprising the step of illuminating or darkening the testing area (20).

14. A method in accordance with any one of the claims 9 to 13, further comprising the step of providing a sheet (32) of background material at the base (18).

15. A method in accordance with any one of the claims 9 to 14, further comprising the step of detaching the robot hand (26b) from the robot arm (26a) and attaching a different robot hand (26b) to the robot arm (26a) and/or exchanging a material covering the robot hand (26b) before executing a further test run.
